# EUROPÄISCHE PATENTSCHRIFT

(11) **EP 2 697 851 B1**
(45) Veröffentlichungstag und Bekanntmachung des Hinweises auf die Patenterteilung: **18.10.2017**
(21) Anmeldenummer: 12713695.0
(22) Anmeldetag: 03.04.2012
(51) Int. Cl.: H01M 2/02, H01M 12/08, H01M 4/86, H01M 4/88, H01M 12/06

(54) **METALL-LUFT-KNOPFZELLEN UND IHRE HERSTELLUNG**
METAL-AIR BUTTON CELLS AND THE PRODUCTION THEREOF
PILES BOUTON MÉTAL-AIR ET LEUR FABRICATION

(30) Priorität: 13.04.2011 DE 102011007295
(43) Veröffentlichungstag der Anmeldung: 19.02.2014
(73) Patentinhaber: VARTA Microbattery GmbH, 73479 Ellwangen (DE)
(72) Erfinder: PYTLIK, Eduard, 73479 Ellwangen (DE); KREBS, Martin, 73494 Rosenberg (DE)
(74) Vertreter: Patentanwaltskanzlei Cartagena
(86) Internationale Anmeldenummer: PCT/EP2012/056072
(87) Internationale Veröffentlichungsnummer: WO 2012/139933

(56) Entgegenhaltungen:
- EP-A1- 2 036 912
- WO-A1-2007/107911
- WO-A2-2007/056775
- JP-A- 61 126 777
- JP-A- 61 216 275
- JP-A- 61 273 866
- JP-A- 61 290 658
- US-A- 5 308 711
- US-A1- 2007 160 898
- US-A1- 2008 155 813
- US-A1- 2011 027 664

## Beschreibung

Die vorliegende Erfindung betrifft ein Verfahren zur Herstellung einer Metall-Luft-Knopfzelle mit einer Luftkathode und einer metallbasierten Anode.

Metall-Luft-Zellen enthalten als elektrochemische Aktivkomponenten üblicherweise eine metallbasierte Anode und eine Luftkathode, die durch einen ionenleitfähigen Elektrolyten voneinander getrennt sind. Bei der Entladung wird an der Luftkathode Sauerstoff unter Elektrodenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es existieren sowohl primäre als auch sekundäre Metall-Luft-Zellen. Eine sekundäre Metall-Luft-Zelle wird wieder aufgeladen, indem zwischen Anode und Kathode eine Spannung angelegt und die beschriebene elektrochemische Reaktion umgekehrt wird. Dabei wird Sauerstoff freigesetzt.

Das bekannteste Beispiel einer Metall-Luft-Zelle ist die Zink-Luft-Zelle. Diese findet in Knopfzellenform insbesondere als Batterie für Hörgeräte Verwendung.

Metall-Luft-Zellen weisen eine relativ hohe Energiedichte auf, weil der Bedarf an Sauerstoff an der Kathode durch Luftsauerstoff aus der Umgebung gedeckt werden kann. Entsprechend muss der Kathode beim Entladevorgang Luftsauerstoff zugeführt werden. Umgekehrt muss beim Ladevorgang einer Metall-Luft-Zelle an der Luftkathode entstehender Sauerstoff abgeführt werden. Zu diesem Zweck weisen Metall-Luft-Zellen in der Regel Gehäuse auf, die mit entsprechenden Eintritts- bzw. Austrittsöffnungen versehen sind. In der Regel werden als Eintritts- bzw. Austrittsöffnungen Löcher in die Gehäuse eingestanzt, beispielsweise in den Boden eines Knopfzellengehäuses. Innerhalb der Gehäuse erfolgt die Feinverteilung des eintretenden Luftsauerstoffs üblicherweise über geeignete Membranen oder Filter.

Als Luftkathode kommen in Metall-Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Am häufigsten kommen in Metall-Luft-Zellen als Luftkathoden kunststoffgebundene Gasdiffusionselektroden zum Einsatz. Solche Gasdiffusionselektroden sind beispielsweise in der DE 3722019 A1 beschrieben. In solchen Elektroden bildet ein Kunststoffbinder (meist Polytetrafluorethylen, kurz PTFE) eine poröse Matrix aus, in die Partikel aus einem elektrokatalytisch aktiven Material (z.B. aus einem Edelmetall wie Platin oder Palladium oder aus einem Manganoxid) eingelagert sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, zum Beispiel aus Silber, Nickel oder versilbertem Nickel, eingewalzt werden. Das Metallnetz bildet eine Ableiterstruktur innerhalb der Elektrode und dient als Stromableiter.

Aus US 5308711 A, WO 2007/056775 A2, US 2007/0160898 A1 und US 2008/0155813 A1 sind Metall-Luft-Zellen mit Luftkathoden bekannt, zu deren Herstellung eine Trockenmischung aus einem Katalysator, einem Polymer und gegebenenfalls weiteren Additiven durch Walzen in eine flächige Form überführt wird.

JP S61-126777 A und JP S61-273866 A beschreiben Verfahren zur Herstellung von Luftkathoden, bei welchen poröse PTFE-Filme mittels Warmpressplattierung mit einer Katalysatorschicht verbunden werden.

Aus JP S61-290658 A und JP S61-216275 A sind Verfahren zur Herstellung von Luftkathoden bekannt, bei welchen wässrige Suspensionen aus einem Katalysator, einem Polymer und gegebenenfalls weiteren Additiven auf einen Polymerfilm aufgebracht und anschließend mit diesem verpresst werden.

Aus der WO 2007/107911 A1 ist eine Zink-Luft-Zelle bekannt, die einen durch Verklebung gebildeten Kathode/Separator-Verbund aufweist.

Batterien sind nicht nur durch Zusammenfügen fester Einzelkomponenten herstellbar, vielmehr gewinnen in den letzten Jahren auch verstärkt Batterien an Bedeutung, zu deren Herstellung zumindest einzelne Funktionsteile, insbesondere die Elektroden und/oder erforderliche Leiterbahnen, durch Druck, also aus einer lösungs- und/oder suspensionsmittelhaltigen Paste, hergestellt werden. In der Regel weisen gedruckte Batterien einen mehrschichtigen Aufbau auf. In herkömmlicher Bauweise umfasst eine gedruckte Batterie meist zwei Stromkollektorebenen, zwei Elektrodenebenen und eine Separatorebene in stapelartiger Anordnung. Die Separatorebene ist dabei zwischen den zwei Elektrodenebenen angeordnet während die Stromkollektoren die Ober- bzw. die Unterseite der Batterie bilden. Eine Batterie mit einem solchen Aufbau ist beispielsweise in der US 4119770 A beschrieben.

Deutlich flachere Batterien, bei denen sich die Elektroden nebeneinander auf einem flächigen, elektrisch nicht leitenden Substrat befinden, sind der WO 2006/105966 zu entnehmen. Die Elektroden sind über einen ionenleitfähigen Elektrolyten miteinander verbunden, bei dem es sich beispielsweise um eine gelartige Zinkchloridpaste handeln kann. In aller Regel ist der Elektrolyt dabei durch ein vlies- oder netzartiges Material verstärkt und stabilisiert.

Bislang sind nur gedruckte Batterien mit Feststoffelektroden bekannt. Dies sind auf der Kathodenseite zum Beispiel Braunsteinelektroden bei wässrigen Systemen und Elektroden aus Lithiumkobaltoxid oder Lithiumeisenphosphat bei Systemen mit organischem Elektrolyt. Batterien, bei denen gedruckte Funktionsteile mit einer Gasdiffusionselektrode kombiniert werden, sind bislang noch unbekannt.

Der vorliegenden Erfindung lag die Aufgabe zugrunde, Knopfzellen bereitzustellen, die sich durch eine besonders hohe Kapazität auszeichnen und einfach herzustellen sind.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 10 angegeben.

Das erfindungsgemäße Verfahren dient der Herstellung von Knopfzellen, welche als Luftkathode kunststoffgebundene Gasdiffusionselektroden mit der eingangs beschriebenen Funktionalität aufweisen. Wie diese weisen auch die erfindungsgemäß verwendeten Gasdiffusionselektroden eine poröse Kunststoffmatrix auf, in die Partikel aus einem elektrokatalytisch aktiven Material (kurz: Katalysatorpartikel) eingelagert sind. Insbesondere eignen sich gemäß dem erfindungsgemäßen Verfahren hergestellte Gasdiffusionselektroden als Luftkathoden für Metall-Luft-Zellen.

Besonders zeichnet sich das erfindungsgemäße Verfahren dadurch aus, dass die Luftkathode mittels eines Druckprozesses hergestellt wird. Sie wird bevorzugt in Form einer flächigen Schicht auf ein flächiges, schichtförmiges Substrat aufgebracht. Der beim Drucken entstandene Schichtverbund umfassend das flächige Substrat und die darauf aufgebrachte Luftkathode wird anschließend in ein Knopfzellengehäuse eingesetzt und mit einer metallbasierten Anode kombiniert.

Unter einem einem Druckprozess soll vorliegend allgemein verstanden werden, dass eine Paste, ein Feststoff-Flüssigkeitsgemisch, auf ein Substrat aufgebracht wird.

In einer bevorzugten Ausführungsform kann als Substrat ein Separator, insbesondere eine Separatorfolie, verwendet werden, wie sie allgemein in Knopfzellen verwendet wird. Hierbei kann es sich insbesondere um eine mikroporöse Kunststoffolie oder um einen vlies- oder filzbasierten Separator handeln. Dem Fachmann sind geeignete Separatormaterialien bekannt.

Beim Drucken der Luftkathode entsteht in dieser Ausführungsform ein Schichtverbund, der sowohl die Funktion eines Separators als auch die einer Luftkathode vereint. Bei der Herstellung von Knopfzellen unter Verwendung eines solchen Schichtverbunds kann somit ein Montageschritt (entweder das Einsetzen der Luftkathode oder das Einsetzen des Separators) entfallen.

Bevorzugt wird vor dem Aufbringen der Luftkathode eine bevorzugt netz- oder gitterartige Ableiterstruktur auf den Separator aufgebracht. Alternativ oder zusätzlich kann eine solche Ableiterstruktur auch auf die auf den Separator aufgedruckte Luftkathode aufgebracht werden.

Die Ableiterstruktur setzt sich in der Regel aus Leiterbahnen zusammen und dient vor allem als Stromkollektor. Solche Leiterbahnen können auf verschiedenste Weise realisiert werden. Zum einen ist es möglich, elektrische Folien, insbesondere Metallfolien, als Leiterbahnen zu verwenden. Auch die Verwendung eines Netzes oder eines Gitters aus einem Metall, zum Beispiel aus Nickel, Silber oder versilbertem Nickel, ist möglich. Zum anderen kann es sich bei den Leiterbahnen auch um dünne Metallschichten handeln, die mittels eines üblichen Metallisierungsverfahrens (z.B. durch Abscheidung aus der Gasphase) auf ein Substrat aufbringbar sind. Schließlich können die Leiterbahnen natürlich auch gedruckt werden, beispielsweise unter Verwendung einer Silberpartikel enthaltenden Paste.

In einer weiteren bevorzugten Ausführungsform kann als Substrat ein luftdurchlässiges, flächiges Substrat aus einem mikroporösen Material wie einem Vlies, Papier, Filz oder einem mikroporösen Kunststoff verwendet werden.

Solche Substrate dienen innerhalb der Gehäuse von Knopfzellen häufig als Membranen oder Filter zur Feinverteilung des in das Gehäuse eintretenden Luftsauerstoffs. Dem Fachmann sind geeignete mikroporösen Substrate bekannt.

Beim Drucken der Luftkathode entsteht in dieser Ausführungsform ein Schichtverbund, der sowohl die Funktion eines Mittels zur Feinverteilung des in das Gehäuse eintretenden Luftsauerstoffs als auch die einer Luftkathode vereint. Bei der Herstellung von Knopfzellen unter Verwendung eines solchen Schichtverbunds kann somit ein Montageschritt (entweder das Einsetzen der Luftkathode oder das Einsetzen eines solchen Mittels zur Feinverteilung) entfallen.

Bei Ausführungsformen, bei denen kein solcher Verbund mit der Luftkathode zum Einsatz kommt, ist es bevorzugt, dass ein Vlies, Papier, Filz oder eine mikroporöse Kunststofffolie als separates Bauteil verwendet wird.

Bevorzugt wird vor dem Aufbringen der Luftkathode eine bevorzugt netz- oder gitterartige Ableiterstruktur auf das luftdurchlässige, flächige Substrat aus dem mikroporösen Material aufgebracht. Alternativ oder zusätzlich kann eine solche Ableiterstruktur auch auf die auf das Substrat aufgedruckte Luftkathode aufgebracht werden.

In besonders bevorzugten Ausführungsformen kann ein Separator in Form einer flächigen Schicht auf die auf das luftdurchlässige, flächige Substrat aus dem mikroporösen Material aufgedruckte Luftkathode oder gegebenenfalls auf die darauf befindliche, bevorzugt netz- oder gitterartige Ableiterstruktur aufgedruckt werden. Dabei entsteht ein Schichtverbund, der sowohl die Funktion eines Mittels zur Feinverteilung des in das Gehäuse eintretenden Luftsauerstoffs als auch die einer Luftkathode und die eines Separators vereint. Bei der Herstellung von Knopfzellen unter Verwendung eines solchen Schichtverbunds können somit zwei Montageschritte entfallen.

Bei Ausführungsformen, bei denen keine bevorzugt netz- oder gitterartige Ableiterstruktur aufgebracht wird, ist es bevorzugt, dass ein Ableiter als separates Bauteil, insbesondere in Form eines Netzes oder Gitters, in das Gehäuse der herzustellenden Knopfzelle eingelegt wird.

Bei Ausführungsformen, bei denen der Separator nicht gedruckt oder als Verbund mit der Luftkathode zum Einsatz kommt, ist es bevorzugt, dass Separator als separates Bauteil, insbesondere in Form einer Separatorfolie, in die herzustellende Knopfzelle eingelegt wird.

Überraschenderweise wurde gefunden, dass sich funktionierende Luftkathoden problemlos aus einer Paste umfassend ein Lösungs- und/oder ein Suspensionsmittel, Partikel aus einem elektrokatalytisch aktiven Material (die Katalysatorpartikel) und Partikel aus einem hydrophoben Kunststoff (aus denen die poröse Kunststoffmatrix gebildet wird) drucken lassen. Wie eingangs angesprochen, erfolgt die Herstellung kunststoffgebundener Gasdiffusionselektroden klassisch durch Verpressung von Trockenmischungen aus einem Kunststoffbinder und einem Katalysator. Dass sich funktionierende Luftkathoden auch durch einen vergleichsweise einfachen Druckprozess aus einer lösungs- und/oder ein suspensionsmittelhaltigen Paste herstellen lassen, war a priori so nicht zu erwarten.

Bei dem erwähnten Druckprozess handelt es sich um einen Siebdruckprozess. Beim Siebdruck handelt es sich um ein Druckverfahren, bei dem Druckpasten mittels eines Rakels durch ein feinmaschiges Gewebe hindurch auf das zu bedruckende Material gepresst werden. An den Stellen des Gewebes, an denen dem Druckbild entsprechend keine Paste aufgedruckt werden soll, werden die Maschenöffnungen des Gewebes durch eine Schablone undurchlässig gemacht. An den übrigen Stellen soll die Druckpaste dagegen die Maschenöffnungen problemlos durchdringen können. Damit es nicht zu einem Verstopfen der Maschenöffnungen kommen kann, sollten die in der Druckpaste enthaltenen festen Bestandteile eine gewisse Maximalgröße, die unter der Maschenöffnungsweite liegen sollte, nicht überschreiten.

Die Partikel in vorliegend bevorzugt zum Einsatz kommenden Pasten weisen insbesondere einen mittleren Durchmesser zwischen 1 µm und 50 µm auf. Bevorzugt enthalten die Pasten keine Partikel mit einem Durchmesser und/oder einer Länge > 120 µm, besonders bevorzugt > 80 µm. Diese bevorzugten Größenbereiche gelten sowohl für die Partikel aus dem hydrophoben Kunststoff als auch die aus dem elektrokatalytisch aktiven Material.

Bei dem Lösungsmittel und/oder dem Suspensionsmittel handelt es sich bevorzugt um ein polares Lösungsmittel, insbesondere um Wasser. Gegebenenfalls können auch Wasser-Alkohol-Gemische zum Einsatz kommen. Das Lösungs- bzw. das Suspensionsmittel wird nach dem Aufbringen der Paste in aller Regel entfernt. Dazu kann man es schlicht bei Raumtemperatur verdunsten lassen. Es ist natürlich aber auch möglich, die Verdunstung durch aktive Maßnahmen erhöhte Temperaturen oder das Anlegen von Unterdruck zu unterstützen.

Bei den Partikeln aus dem elektrokatalytisch aktiven Material handelt es sich bevorzugt um die eingangs bereits erwähnten Katalysatormaterialien, also insbesondere um Partikel aus einem Edelmetall wie Palladium, Platin, Silber oder Gold und/oder ein Manganoxid. Betreffend einsetzbare Manganoxide wird insbesondere auf die bereits erwähnte DE 3722019 A1 verwiesen.

Bei den Partikeln aus dem hydrophoben Kunststoff handelt es sich insbesondere um Partikel aus einem Fluorpolymer. Als Fluorpolymer besonders geeignet ist das ebenfalls bereits erwähnte PTFE. Dieses ist aufgrund seiner chemischen Beständigkeit und seines hydrophoben Charakters besonders geeignet. Gemischt mit den eher hydrophilen elektrokatalytisch aktiven Partikeln bildet es eine Elektrodenstruktur mit sowohl hydrophilen als auch hydrophoben Bereichen aus. In eine solche Struktur kann sowohl wässriger Elektrolyt als auch Luft eindringen. Es können also die bereits erwähnten Aggregatzustände in der Elektrode parallel zueinander existieren. Dass die Herstellung solcher poröser Strukturen ohne Heißpressen oder einen Sintervorgang möglich ist, ist sehr überraschend.

Die in einem erfindungsgemäßen Verfahren verwendete Paste enthält bevorzugt mindestens ein leitfähigkeitsverbesserndes Additiv, insbesondere ein partikelförmiges leitfähigkeitsverbesserndes Additiv. Dieses kann insbesondere aus der Gruppe mit Kohlenstoff-Nanotubes (CNTs), Ruß und Metallpartikeln (z.B. aus Nickel) ausgewählt werden.

Die Partikel weisen bevorzugte Größen in den Bereichen auf, die oben bereits für die Partikel aus dem hydrophoben Kunststoff und aus dem elektrokatalytisch aktiven Material angegeben wurden.

Die Paste kann weiterhin noch ein oder mehrere Additive umfassen, insbesondere zur Einstellung der Verarbeitungseigenschaften der Paste. Entsprechend können als Additive grundsätzlich sämtliche für Druckpasten geeignete Additive zum Einsatz kommen, beispielsweise Rheologiehilfsmittel, mit denen die Viskosität der Paste angepasst werden kann.

Die erfindungsgemäß verwendete Paste weist bevorzugt einen Anteil an dem Lösungsmittel und/oder an dem Suspensionsmittel zwischen 20 Gew.-% und 50 Gew.-% auf. In anderen Worten, der Feststoffgehalt der Paste liegt bevorzugt im Bereich zwischen 50 Gew.-% und 80 Gew.-%.

Besonders bevorzugt weist die Paste die folgenden Komponenten in den folgenden Anteilen auf:
- zwischen 20 Gew.-% und 50 Gew.-% des Lösungsmittels und/oder des Suspensionsmittels,
- zwischen 0 Gew.-% und 20 Gew.-% der Partikel aus dem elektrokatalytisch aktiven Material,
- zwischen 0,5 Gew.-% und 5 Gew.-% der Binderpartikel aus dem hydrophoben Kunststoff und
- zwischen 30 Gew.-% und 80 Gew.-% des mindestens einen leitfähigkeitsverbessernden Additivs.

Die prozentualen Anteile der genannten Bestandteile summieren sich bevorzugt auf 100 Gew.-% auf. Dass sich auch Separatoren durch Druck herstellen lassen, ist in der deutschen Patentanmeldung mit dem Aktenzeichen DE 102010018071 A1 beschrieben. Diese schlägt zum Drucken von Separatoren eine Separatordruckpaste vor, die ein Lösungsmittel, mindestens ein Leitsalz, das in dem Lösungsmittel gelöst ist, sowie Partikel und/oder Fasern, die in dem Lösungsmittel bei Raumtemperatur zumindest nahezu, vorzugsweise vollständig, unlöslich und dabei elektrisch nicht leitend sind, umfasst. Überraschenderweise wurde nämlich gefunden, dass beispielsweise aus einer mikroporösen Folie oder aus einem Vlies gebildete Separatoren sich funktionell ohne Weiteres durch eine aus einer solchen Separatordruckpaste herstellbare Elektrolytschicht ersetzen lassen, die die erwähnten Partikel und/oder Fasern aufweist.

In der Separatordruckpaste enthaltene Partikel und/oder Fasern können beim Druckprozess eine dreidimensionale Matrix ausbilden, die dem entstehenden Separator eine feste Struktur und eine ausreichend hohe mechanische Festigkeit verleiht, um Kontakte zwischen entgegengesetzt gepolten Elektroden zu unterbinden. Voraussetzung ist, wie bereits gesagt, dass die Partikel und/oder Fasern elektrisch nicht leitend sind. Weiterhin sollten sie gegenüber der Lösung aus dem mindestens einen Leitsalz und dem Lösungsmittel zumindest bei Raumtemperatur chemisch stabil sein, sich insbesondere darin nicht oder nur sehr wenig lösen. Bevorzugt sind die Partikel und/oder die Fasern in der Separatordruckpaste in einem Anteil zwischen 1 Gew.-% und 75 Gew.-%, insbesondere zwischen 10 Gew.-% und 50 Gew.-%, enthalten. Dabei ist es unerheblich, ob ausschließlich Partikel oder Fasern oder etwa eine Mischung aus Partikeln und Fasern zum Einsatz kommt.

Die Partikel und/oder die Fasern weisen bevorzugt einen mittleren Durchmesser bzw. im Falle der Fasern eine mittlere Länge zwischen 1 µm und 50 µm auf. Besonders bevorzugt ist die Separatordruckpaste dabei frei von Partikeln und/oder Fasern, die einen Durchmesser und/oder eine Länge von mehr als 120 µm aufweisen. Idealerweise liegt der maximale Durchmesser und/oder die maximale Länge der in der Separatordruckpaste enthaltenen Partikel und/oder Fasern bei 80 µm. Dies hängt damit zusammen, dass die Separatordruckpaste ebenfalls insbesondere zur Verarbeitung mittels Siebdruck vorgesehen ist.

Die Partikel und/oder Fasern in der Separatordruckpaste können grundsätzlich aus den unterschiedlichsten Materialien bestehen, sofern die oben genannten Anforderungen (elektrisch nicht leitende Eigenschaften sowie Unlöslichkeit in bzw. chemische Beständigkeit gegenüber der Leitsalzlösung) eingehalten werden. Entsprechend können die Partikel und/oder Fasern sowohl aus einem organischen als auch aus einem anorganischen Feststoff bestehen. Es ist beispielsweise möglich, Fasern aus organischen Materialien mit anorganischen Partikeln zu mischen oder umgekehrt.

Besonders bevorzugt umfasst der anorganische Feststoff mindestens eine Komponente aus der Gruppe mit keramischen Feststoffen, in Wasser nahezu oder vollständig unlöslichen Salzen, Glas, Basalt oder Kohlenstoff. Der Begriff "keramische Feststoffe" soll dabei sämtliche Feststoffe umfassen, die zur Herstellung keramischer Produkte dienen können, darunter silikatische Materialien wie Aluminiumsilikate, Gläser und Tonmineralien, oxidische Rohstoffe wie Titandioxid und Aluminiumoxid sowie nichtoxidische Materialien wie Siliziumkarbid oder Siliziumnitrid.

Der organische Feststoff weist bevorzugt mindestens eine Komponente aus der Gruppe mit synthetischen Kunststoffen, halbsynthetischen Kunststoffen und Naturstoffen auf.

Der Begriff "bei Raumtemperatur nahezu oder vollständig unlöslich" meint dabei, dass bei Raumtemperatur in einem entsprechenden Lösungsmittel eine allenfalls geringe, vorzugsweise gar keine, Löslichkeit besteht. Die Löslichkeit erfindungsgemäß einsetzbarer Partikel und/oder Fasern, insbesondere der erwähnten in Wasser nahezu oder vollständig unlöslichen Salze, sollte idealerweise die Löslichkeit von Calciumcarbonat in Wasser bei Raumtemperatur (25 °C) nicht übersteigen. Bei Calciumcarbonat handelt es sich im Übrigen um ein besonders bevorzugtes Beispiel für einen anorganischen Feststoff, der als Komponente mit Abstandshalterfunktion insbesondere in Partikelform in einer Separatordruckpaste enthalten sein kann.

Der Begriff "Faser" ist sehr breit auszulegen. Es sollen darunter insbesondere längliche Gebilde verstanden werden, die im Verhältnis zu ihrer Länge sehr dünn sind. Gut einsetzbar sind beispielsweise Fasern aus synthetischen Polymeren wie zum Beispiel Polyamidfasern oder Polypropylenfasern. Alternativ können auch Fasern anorganischen oder organischen Ursprungs wie beispielsweise Glasfasern, Keramikfasern, Fasern aus Kohlenstoff oder Cellulosefasern zum Einsatz kommen.

Bei dem Lösungsmittel in der Separatordruckpaste handelt es sich bevorzugt um ein polares Lösungsmittel, beispielsweise um Wasser. Grundsätzlich können jedoch auch nicht wässrige aprotische Lösungsmittel verwendet werden, wie sie aus dem Bereich der Lithium-Ionen-Batterien bekannt sind.

Bei dem Leitsalz in einer Separatordruckpaste handelt es sich bevorzugt um mindestens eine Verbindung, die bei Raumtemperatur in dem in der Druckpaste enthaltenen Lösungsmittel löslich ist bzw. die in diesem in Form von solvatisierten Ionen vorliegt. Es umfasst bevorzugt mindestens eine Komponente aus der Gruppe mit Zinkchlorid, Kaliumhydroxid und Natriumhydroxid. Darüber hinaus sind gegebenenfalls auch noch Leitsalze wie Lithiumtetrafluoroborat, die ebenfalls insbesondere aus dem Bereich der Lithium-lonen-Batterien bekannt sind, als Leitsalz einsetzbar.

Neben Leitsalzen, einem Lösungsmittel und den beschriebenen Partikeln und/oder Fasern kann die Separatordruckpaste zusätzlich noch einen Binder und/oder ein oder mehrere Additive umfassen. Während der Binder insbesondere dazu dient, dem aus der Separatordruckpaste herstellbaren Separator eine bessere mechanische Stabilität, idealerweise eine bessere mechanische Belastbarkeit und Flexibilität zu verleihen, dienen die Additive insbesondere dazu, die Verarbeitungseigenschaften der Separatordruckpaste zu variieren. Entsprechend können als Additive grundsätzlich sämtliche für Druckpasten geeignete Additive zum Einsatz kommen, beispielsweise Reologiehilfsmittel, mit denen die Viskosität der Separatordruckpaste angepasst werden kann. Bei dem Binder kann es sich beispielsweise um einen organischen Binder wie Carboxymethylcellulose handeln. Auch andere, gegebenenfalls auch anorganische Komponenten wie Siliziumdioxid, sind als Zusätze mit bindenden Eigenschaften geeignet.

Der Separator wird bevorzugt in einer Dicke zwischen 10 µm und 500 µm, insbesondere zwischen 10 µm und 100 µm, gedruckt. In diesem Bereich weist er ausreichend gute separierende Eigenschaften auf, um einen Kurzschluss zwischen entgegengesetzt gepolten Elektroden zu verhindern.

Das Gehäuse einer Knopfzelle setzt sich in der Regel aus einem Zellenbecher, einem Zellendeckel und einer zwischen diesen angeordneten Dichtung zusammen. Bei Metall-Luft-Zellen weist in der Regel der Boden des Zellenbechers die eingangs erwähnten Eintritts- bzw. Austrittsöffnungen für Sauerstoff auf. Bei einer klassischen Fertigungsvariante zur Herstellung von Metall-Luft-Knopfzellen wird in einen napfförmigen Zellenbecher ein Filterpapier (oder alternativ die bereits erwähnte mikroporöse Folie oder das Vlies) eingelegt, das den Boden des Bechers und die darin eingestanzten Eintritts- bzw. Austrittsöffnungen abdeckt. Das Filterpapier dient als Mittel zur Feinverteilung von über die Öffnungen eintretendem Luftsauerstoff innerhalb der Zelle.

Bei der Herstellung von klassischen Knopfzellen wird anschließend auf das Filterpapier eine poröse, aus einer Trockenmischung gepresste Luftkathode (z.B. wie in der DE 3722019 A1 beschrieben) abgelegt, an der die Reduktion von Luftsauerstoff erfolgen kann. Diese wird wiederum mit einem flächigen Separator abgedeckt, der in der Zelle die Grenzschicht zwischen Anoden- und Kathodenraum bildet. Kombiniert wird ein derart vormontiertes Becherteil in der Regel mit einem napfförmigen Zellenbecher, der z.B. mit Zinkpulver als Anodenmaterial sowie mit Elektrolyt befüllt ist und auf dessen Außenseite eine ringförmige Kunststoffdichtung aufgezogen ist. Dieser wird in den Zellenbecher eingeschoben, so dass die Kunststoffdichtung zwischen den beiden Gehäuseteilen zum Liegen kommt. Durch Umbördeln des endständigen Randes des Zellenbechers über den eingeschobenen Zellendeckel kann die Zelle flüssigkeitsdicht verschlossen werden.

Gemäß der vorliegenden Erfindung werden zur Herstellung von Knopfzellen die erwähnten Schichtverbünde aus dem beschriebenen Substrat und der darauf aufgedruckten Luftkathode verwendet. Hierzu können Segmente, insbesondere kreisförmige oder ovale Segmente, aus dem jeweiligen Schichtverbund herausgetrennt (z.B. durch Ausstanzen) und in ein Knopfzellengehäuse, wie es auch klassisch verwendet wird, eingelegt werden. Abhängig vom verwendeten Schichtverbund kann, wie oben erwähnt, gegebenenfalls auf den klassisch verwendeten Separator oder das Mittel zur Feinverteilung von Luftsauerstoff verzichtet werden.

Da gedruckte Luftkathoden in Form von sehr dünnen Schichten hergestellt werden können, kann sich hieraus eine große Platzersparnis innerhalb der Zelle ergeben. Dies gilt selbst dann, wenn auf das zur Feinverteilung von Luftsauerstoff und oder einen zusätzlichen Separator nicht verzichtet werden kann. In der Folge kann mehr Aktivmaterial in die Zelle eingebracht werden, die entsprechend eine größere Kapazität aufweist.

Geeignete Anoden, mit denen der Schichtverbund in dem Knopfzellengehäuse kombiniert werden kann, sind dem Fachmann grundsätzlich bekannt. Besonders bevorzugt kommen zinkhaltige Anoden zum Einsatz.

Gemäß der Erfindung hergestellte Metall-Luft-Knopfzellen weisen einen einteiligen Schichtverbund umfassend ein flächiges Substrat und eine mittels Siebdruck darauf aufgebrachte Luftkathode auf. Bevorzugt weist dieser Schichtverbund eine der folgenden Schichtsequenzen auf:
(1) luftdurchlässiges, flächiges Substrat - Luftkathode
(2) luftdurchlässiges, flächiges Substrat - Ableiterstruktur - Luftkathode
(3) luftdurchlässiges, flächiges Substrat - Luftkathode - Ableiterstruktur
(4) luftdurchlässiges, flächiges Substrat - Ableiterstruktur - Luftkathode - Ableiterstruktur
(5) luftdurchlässiges, flächiges Substrat - Ableiterstruktur - Luftkathode - Ableiterstruktur - Separator
(6) Ableiterstruktur - Luftkathode - Ableiterstruktur - Separator
(7) Luftkathode - Ableiterstruktur - Separator
(8) Ableiterstruktur - Luftkathode - Separator
(9) Luftkathode - Separator

Bevorzugt weisen die Schichtverbünde eine Dicke zwischen 60 µm und 300 µm auf.

Bei den Metall-Luft-Knopfzellen handelt es sich besonders bevorzugt um Zink-Luft-Knopfzellen, also Zellen, die eine zinkhaltige Anode aufweisen.

Weitere Merkmale der Erfindung ergeben sich aus der nachfolgenden Beschreibung bevorzugter Ausführungsformen. Es sei an dieser Stelle explizit betont, dass sämtliche in der vorliegenden Anmeldung beschriebenen fakultativen Aspekte des erfindungsgemäßen Verfahrens jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

### Zeichnungen

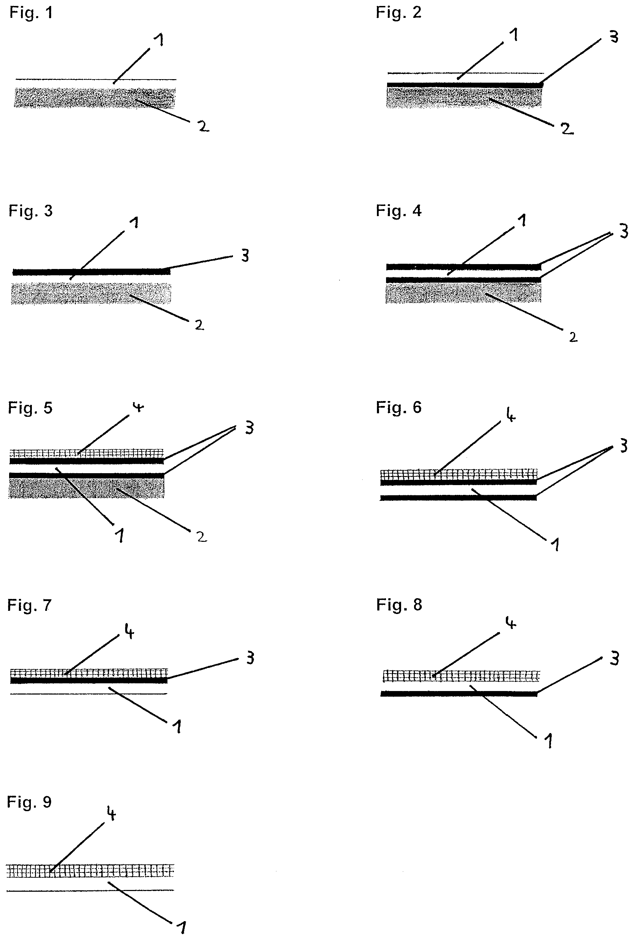

In den Figuren 1 bis 9 sind Querschnitte der oben angesprochenen Ausführungsformen (1) bis (9) eines Schichtverbunds umfassend ein flächiges Substrat und eine darauf aufgebrachte Luftkathode schematisch dargestellt:
- Fig.1: zeigt einen Schichtverbund mit der Sequenz luftdurchlässiges, flächiges Substrat 2 - Luftkathode 1
- Fig.2: zeigt einen Schichtverbund mit der Sequenz luftdurchlässiges, flächiges Substrat 2 - Ableiterstruktur 3 - Luftkathode 1
- Fig.3: zeigt einen Schichtverbund mit der Sequenz luftdurchlässiges, flächiges Substrat 2 - Luftkathode 1- Ableiterstruktur 3
- Fig.4: zeigt einen Schichtverbund mit der Sequenz luftdurchlässiges, flächiges Substrat 2 - Ableiterstruktur 3 - Luftkathode 1- Ableiterstruktur 3
- Fig.5: zeigt einen Schichtverbund mit der Sequenz luftdurchlässiges, flächiges Substrat 2 - Ableiterstruktur 3 - Luftkathode 1 - Ableiterstruktur 3 - Separator 4
- Fig.6: zeigt einen Schichtverbund mit der Sequenz Ableiterstruktur 3 - Luftkathode 1 - Ableiterstruktur 3 - Separator 4
- Fig.7: zeigt einen Schichtverbund mit der Sequenz Luftkathode 1 - Ableiterstruktur 3 - Separator 4
- Fig.8: zeigt einen Schichtverbund mit der Sequenz Ableiterstruktur 3 - Luftkathode 1 - Separator 4
- Fig.9: zeigt einen Schichtverbund mit der Sequenz Luftkathode 1 - Separator 4
- Fig.10: zeigt eine Ausführungsform einer gemäß der Erfindung herstellbaren Metall-Luft-Knopfzelle 100 (schematische Querschnittsdarstellung)

### Ausführungsbeispiele

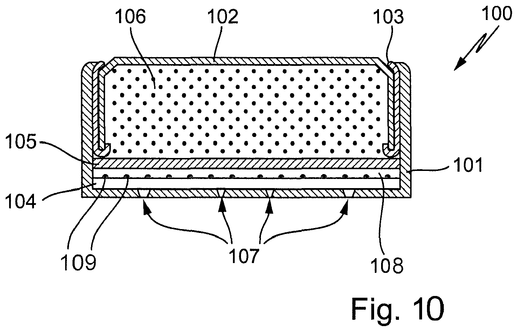

(1) Herstellung eines Schichtverbundes mit der Schichtabfolge "Substrat - Ableiterstruktur - Luftkathode"
   Auf eine mikroporöse Teflonfolie (als Substrat) wurde aus einer Silberpaste eine netzförmige Struktur aus Stromableitern (die Ableiterstruktur) gedruckt. Auf diese wurde eine Luftkathode mittels eines Siebdruckverfahrens gedruckt. Die Paste für die Luftkathode enthielt eine Mischung aus 5 Gewichtsteilen Teflonpartikel (als Partikel aus dem elektrokatalytisch aktiven Material) mit einer mittleren Partikelgröße von 10 µm, 10 Gewichtsteile Manganoxidpartikel mit einer mittleren Partikelgröße von 20 µm (als Partikel aus dem elektrokatalytisch aktiven Material) und 50 Gewichtsteile Aktivkohle (als leitfähigkeitsverbesserndes Additiv) mit einer Partikelgröße von 50 µm. Als flüssige Komponente enthielt die Paste 35 Gewichtsteile Wasser (als Suspensions- und/oder Lösungsmittel).
   Die Luftkathode wurde in einer Schichtdicke von ca. 100 µm auf die Teflonfolie aufgedruckt. Nach Entfernen des Lösungsmittels bzw. des Suspensionsmittels betrug die Schichtdicke der entstehenden flächigen Luftkathode auf der Folie ca. 50 µm. Der entstehenden Schichtverbund mit der Schichtabfolge "Substrat - Ableiterstruktur - Luftkathode" wies eine Gesamtdicke von ca. 150 µm auf.
(2) Herstellung eines Schichtverbundes mit der Schichtabfolge "Substrat - Ableiterstruktur - Luftkathode - Separator"
   Auf den gemäß (1) hergestellten Schichtverbund wurde ein Separator gedruckt. Dazu wurden 77,8 Gewichtsteile einer 50%igen Zinkchloridlösung mit 3,4 Gewichtsteilen amorphem Siliziumdioxid und 18,8 Gewichtsteilen eines Calciumcarbonatpulvers vermischt. Das gelöste Zinkchlorid sollte die erforderliche lonenleitfähigkeit des Elektrolyten in der herzustellenden Batterie gewährleisten. Das verwendete Calciumcarbonatpulver bestand zu ca. 50 % aus einem Pulver mit einer mittleren Korngröße < 11 µm und zu ca. weiteren 50 % aus einem Pulver mit einer mittleren Korngröße < 23 µm. Es wies also eine bimodale Verteilung auf. Das Siliziumdioxid diente insbesondere zur Einstellung der Viskosität der erfindungsgemäß verwendeten Paste.
   Mit einer solchen Paste wurde die Luftkathode überdruckt. Die entstehende Elektrolyt- bzw. Separatorschicht wies eine Dicke von ca. 50 µm auf.
(3) Herstellung einer Zink-Luft-Knopfzelle
   Mit den gemäß (1) und (2) hergestellten Schichtverbünden können Knopfzellen gefertigt werden. Dazu werden aus den Schichtverbünden beispielsweise kreisförmige oder ovale Segmente ausgestanzt und in einen bereitgestellten Zellenbecher, dessen Boden Eintritts- bzw. Austrittsöffnungen für Sauerstoff aufweist, eingelegt werden. Bei Verwendung eines gemäß (1) gefertigten Schichtverbundes muss dieser mit einem Separator abgedeckt werden. Bei Verwendung eines gemäß (2) gefertigten Schichtverbundes kann dieser Schritt entfallen.
   Danach wird der Zellenbecher mit dem darin enthaltenen Schichtverbund und gegebenenfalls dem Separator mit einem Zellendeckel kombiniert, der mit Anodenmaterial sowie mit einem Elektrolyten befüllt ist.
   Eine unter Verwendung eines gemäß (2) hergestellten Schichtverbundes gefertigte Metall-Luft-Knopfzelle ist in Fig. 10 dargestellt. Die Zelle weist ein Gehäuse aus dem Zellenbecher 101 und dem Zellendeckel 102 auf. Zwischen diesen ist die Dichtung 103 angeordnet, die den Zellendeckel 102 vom Zellenbecher 101 isoliert. Der Boden des Zellenbechers 101 weist mehrere Zutrittsöffnungen 107 auf, über die Luft, insbesondere Luftsauerstoff, ins Gehäuse einströmen kann.
   Der gemäß (2) hergestellte Schichtverbund umfasst das luftdurchlässige, flächige Substrat 104. Bei diesem könnte es sich, wie oben beschrieben, beispielsweise auch um ein Filterpapier oder ein Vlies handeln. Auf dem Substrat 104 ist eine netzförmige Ableiterstruktur 109 abgeschieden, welche wiederum zur Bildung der Luftkathodenschicht 108 mit der beschriebenen Paste enthaltend die Teflonpartikel und die Manganoxidpartikel überdruckt wurde. Schließlich umfasst der Sichtverbund noch die Separatorschicht 105. Diese trennt die Luftkathode 108 von der Anode 106, bei der es sich beispielsweise um eine zinkhaltige Paste handeln kann.

## Patentansprüche

1. Verfahren zur Herstellung einer Metall-Luft-Knopfzelle mit einer Luftkathode und einer metallbasierten Anode, wobei die Luftkathode mittels eines Siebdruckprozesses in Form einer flächigen Schicht auf ein flächiges, schichtförmiges Substrat aufgebracht wird und der beim Drucken entstandene Schichtverbund umfassend das flächige Substrat und die darauf aufgebrachte Luftkathode in ein Knopfzellengehäuse eingesetzt und mit der metallbasierten Anode kombiniert wird.

2. Verfahren nach Anspruch 1, **dadurch gekennzeichnet, dass** als Substrat ein Separator, insbesondere eine Separatorfolie, verwendet wird.

3. Verfahren nach Anspruch 2, **dadurch gekennzeichnet, dass**
• vor dem Aufbringen der Luftkathode eine bevorzugt netz- oder gitterartige Ableiterstruktur auf den Separator und/oder dass
• eine bevorzugt netz- oder gitterartige Ableiterstruktur (nach dem Aufbringen der Luftkathode) auf die Luftkathode
aufgebracht, insbesondere aufgedruckt, wird.

4. Verfahren nach Anspruch 1, **dadurch gekennzeichnet, dass** als Substrat ein luftdurchlässiges, flächiges Substrat aus einem mikroporösen Material wie einem Vlies, Papier, Filz oder einem mikroporösen Kunststoff verwendet wird.

5. Verfahren nach Anspruch 4, **dadurch gekennzeichnet, dass**
• vor dem Aufbringen der Luftkathode eine bevorzugt netz- oder gitterartige Ableiterstruktur auf das luftdurchlässige, flächige Substrat und/oder dass
• eine bevorzugt netz- oder gitterartige Ableiterstruktur (nach dem Aufbringen der Luftkathode) auf die Luftkathode
aufgebracht, insbesondere aufgedruckt, wird.

6. Verfahren nach Anspruch 4 oder 5, **dadurch gekennzeichnet, dass** ein Separator in Form einer flächigen Schicht auf die Luftkathode oder gegebenenfalls auf die bevorzugt netz- oder gitterartige Ableiterstruktur aufgedruckt wird.

7. Verfahren nach einem der vorhergehenden Ansprüche, **dadurch gekennzeichnet, dass** die Luftkathode aus einer Paste umfassend ein Lösungs- und/oder ein Suspensionsmittel, Partikel aus einem elektrokatalytisch aktiven Material und Binderpartikel aus einem hydrophoben Kunststoff gedruckt wird.

8. Verfahren nach Anspruch 7, **dadurch gekennzeichnet, dass** es sich bei dem Lösungsmittel und/oder dem Suspensionsmittel um Wasser handelt.

9. Verfahren nach einem der Ansprüche 7 oder 8, **dadurch gekennzeichnet, dass** es sich bei den Partikeln aus dem elektrokatalytisch aktiven Material um Partikel aus einem Edelmetall und/oder Manganoxid handelt.

10. Verfahren nach einem der Ansprüche 7 bis 9, **dadurch gekennzeichnet, dass** es sich bei den Partikeln aus dem hydrophoben Kunststoff um Partikel aus einem Fluorpolymer, insbesondere aus PTFE, handelt.

## Claims

1. Method of producing a metal-air button cell comprising an air cathode and a metal-based anode, wherein the air cathode is applied in the form of a planar layer to a planar, laminar substrate by means of a screen printing process, and the layer assembly formed during the printing and comprising the planar substrate and the air cathode applied thereto is inserted into a button cell housing and is combined with the metal-based anode.

2. Method according to Claim 1, **characterized in that** a separator, in particular a separator film, is used as the substrate.

3. Method according to Claim 2, **characterized in that**
• before applying the air cathode, a preferably mesh-like or grid-like collector structure is applied to, in particular printed onto, the separator, and/or **in that**
• a preferably mesh-like or grid-like collector structure is applied to, in particular printed onto, the air cathode (after applying the air cathode).

4. Method according to Claim 1, **characterized in that** an air-permeable, planar substrate of a microporous material, such as a nonwoven, paper, felt or a microporous plastic, is used as the substrate.

5. Method according to Claim 4, **characterized in that**
• before applying the air cathode, a preferably mesh-like or grid-like collector structure is applied to, in particular printed onto, the air-permeable, planar substrate, and/or **in that**
• a preferably mesh-like or grid-like collector structure is applied to, in particular printed onto, the air cathode (after applying the air cathode).

6. Method according to Claim 4 or 5, **characterized in that** a separator in the form of a planar layer is printed onto the air cathode or optionally onto the preferably mesh-like or grid-like collector structure.

7. Method according to one of the preceding claims, **characterized in that** the air cathode is printed from a paste comprising a solvent and/or suspending agent, particles of an electrocatalytically active material and binder particles of a hydrophobic plastic.

8. Method according to Claim 7, **characterized in that** the solvent and/or the suspending agent is water.

9. Method according to either of Claims 7 and 8, **characterized in that** the particles of the electrocatalytically active material are particles of a noble metal and/or manganese oxide.

10. Method according to one of Claims 7 to 9, **characterized in that** the particles of the hydrophobic plastic are particles of a fluoropolymer, in particular of PTFE.

## Revendications

1. Procédé pour la fabrication d'une pile bouton métal-air, présentant une cathode à air et une anode à base de métal, la cathode à air étant appliquée au moyen d'un procédé de sérigraphie sous forme d'une couche plate sur un substrat plat en forme de couche et le composite à couches formé lors de l'impression, comprenant le substrat plat et la cathode à air qui y est appliquée, étant utilisé dans un boîtier de pile bouton et combiné avec l'anode à base de métal.

2. Procédé selon la revendication 1, **caractérisé en ce qu'**on utilise, comme substrat, un séparateur, en particulier une feuille de séparateur.

3. Procédé selon la revendication 2, **caractérisé en ce qu'**on applique, en particulier imprime
- une structure de collecteur, de préférence de type réseau ou grille, avant l'application de la cathode à air sur le séparateur et/ou
- une structure de collecteur, de préférence de type réseau ou grille (après l'application de la cathode à air) sur la cathode à air.

4. Procédé selon la revendication 1, **caractérisé en ce qu'**on utilise, comme substrat, un substrat plat, perméable à l'air, constitué par un matériau microporeux tel qu'un non-tissé, un papier, un feutre ou un matériau synthétique microporeux.

5. Procédé selon la revendication 4, **caractérisé en ce qu'**on applique, en particulier imprime
- une structure de collecteur, de préférence de type réseau ou grille, avant l'application de la cathode à air sur le substrat plat, perméable à l'air et/ou
- une structure de collecteur, de préférence de type réseau ou grille (après l'application de la cathode à air) sur la cathode à air.

6. Procédé selon la revendication 4 ou 5, **caractérisé en ce qu'**un séparateur est imprimé sous forme d'une couche plate sur la cathode à air ou le cas échéant sur la structure de collecteur de préférence de type réseau ou de grille.

7. Procédé selon l'une quelconque des revendications précédentes, **caractérisé en ce que** la cathode à air est imprimée à partir d'une pâte, comprenant un solvant et/ou un agent de mise en suspension, des particules en un matériau actif d'un point de vue électrocatalytique et des particules de liant en un matériau synthétique hydrophobe.

8. Procédé selon la revendication 7, **caractérisé en ce qu'**il s'agit, pour le solvant et/ou l'agent de mise en suspension, d'eau.

9. Procédé selon l'une quelconque des revendications 7 ou 8, **caractérisé en ce qu'**il s'agit, pour les particules en matériau actif d'un point de vue électrocatalytique, de particules en un métal noble et/ou en oxyde de manganèse.

10. Procédé selon l'une quelconque des revendications 7 à 9, **caractérisé en ce qu'**il s'agit, pour les particules en matériau synthétique hydrophobe, de particules en un polymère fluoré, en particulier en PTFE.
